# EUROPEAN PATENT SPECIFICATION

(11) **EP 4 475 323 B1**
(45) Date of publication and mention of the grant of the patent: **25.11.2026**
(21) Application number: 23747037.2
(22) Date of filing: 26.01.2023
(51) Int. Cl.: H01M 50/507, H01G 11/10, H01M 50/209, H01M 50/213, H01M 50/503, H01M 50/509, H01M 50/584, H01G 11/72, H01G 11/76, H01G 11/82, H01M 50/48, H01G 11/78

(54) **ELECTRIC POWER STORAGE MODULE**
ELEKTRISCHES ENERGIESPEICHERMODUL
MODULE DE STOCKAGE D'ÉNERGIE ÉLECTRIQUE

(30) Priority: 31.01.2022 JP 2022013665
(43) Date of publication of application: 11.12.2024
(73) Proprietor: Panasonic Intellectual Property Management Co., Ltd., Kadoma-shi, Osaka 571-0057 (JP)
(72) Inventor: NAGATA, Keisuke, Kadoma-shi, Osaka 571-0057 (JP); MURATSU, Jiro, Kadoma-shi, Osaka 571-0057 (JP); TAKASAKI, Hiroshi, Kadoma-shi, Osaka 571-0057 (JP); HIRANO, Tatsuya, Kadoma-shi, Osaka 571-0057 (JP)
(74) Representative: Novagraaf International SA
(86) International application number: PCT/JP2023/002461
(87) International publication number: WO 2023/145827

(56) References cited:
- WO-A1-2019/239904
- WO-A1-2019/239904
- JP-A- 2004 247 320
- JP-A- 2004 247 320
- JP-A- 2016 516 273
- JP-A- 2016 516 273
- JP-A- 2018 116 775
- JP-A- 2018 116 775
- US-B2- 9 490 465

## Description

### Technical Field

The present disclosure relates to an electric power storage module including a current collector plate.

### Background Art

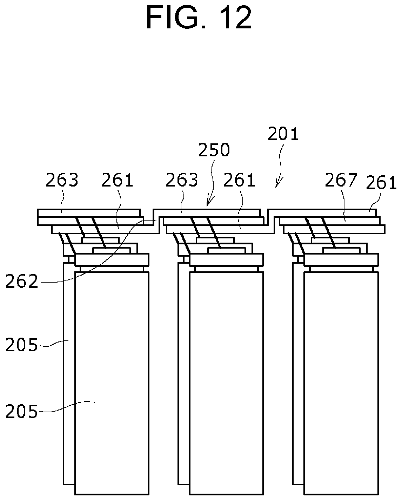

Patent Literature 1 describes one example of a conventional current collecting structure of an electric power storage module. As shown in FIG. 12, current collecting structure 250 of battery module 201 includes a plurality of current collector plates 251, and each current collector plate 251 includes first flat plate part 261, and second flat plate part 263 coupled to first flat plate part 261 via stepped part 262. Current collector plate 251 is produced by bending a sheet metal. First flat plate part 261 constitutes a lower layer closer to battery 205, and second flat plate part 263 constitutes an upper layer part more distant from battery 205 than first flat plate part 261. Two adjacent current collector plates 251 are disposed such that first flat plate part 261 of one current collector plate 251 and second flat plate part 263 of the other current collector plate 251 overlap in the thickness direction. Insulating plate 267 is disposed between first flat plate part 261 and second flat plate part 263. To first flat plate part 261, corresponding negative electrodes of plurality of batteries 205, which are connected in parallel, are electrically connected. To second flat plate part 263 that overlaps first flat plate part 261, corresponding positive electrodes of plurality of batteries 205 are electrically connected. Current collecting structure 250 serially connects a plurality of the thus parallelly connected batteries.

### Citation List

### Patent Literature

[PTL 1] US Patent No. 9,490,465

### SUMMARY OF THE INVENTION

Current collecting structure 250 mentioned above includes a plurality of current collector plates 251 to each of which first flat plate part 261 and second flat plate part 263 are coupled via stepped part 262. Current collector plate 251 is produced by bending a sheet metal. Therefore, the tolerance of current collector plate 251 easily increases, which makes it difficult to achieve high dimensional accuracy of current collecting structure 250. Accordingly, an object of the present disclosure is to provide an electric power storage module capable of suppressing tolerance.

An electric power storage module according to the present disclosure includes a plurality of electric power storage devices arranged, and a plurality of current collector plates electrically connected to the plurality of electric power storage devices, wherein the plurality of electric power storage devices includes a current collector main body that is flat plate-shaped and inclined with respect to an arrangement direction of the plurality of electric power storage devices, and is arranged in a row, and the plurality of current collector plates includes a first current collector plate and a second current collector plate that are adjacent to each other, and a part of the current collector main body of the first current collector plate overlap at least a part of the current collector main body of the second current collector plate in the height direction.

The electric power storage module of the present disclosure has a simple structure in which a current collector main body of each current collector plate is simple flat plate shaped, and for two adjacent current collector plates, at least a part of the current collector main body of one of the current collector plates is simply stacked in the height direction on at least a part of the current collector main body of the other current collector plate. Therefore, the tolerance of the current collecting structure can be suppressed, and a current collecting structure with high dimensional accuracy can be constructed.

### BRIEF DESCRIPTION OF THE DRAWINGS

FIG. 1 is a perspective view of a battery module in accordance with one exemplary embodiment of the present disclosure.
FIG. 2 is an exploded perspective view of the battery module.
FIG. 3 is a perspective view of a current collecting structure showing a current collector plate in which a part located below the other current collector plate is indicated by a dotted line.
FIG. 4 is a plan view seen in the height direction of a current collecting structure showing a current collector plate in which a part located below the other current collector plate is indicated by a dotted line.
FIG. 5 is a plan view of the battery module seen from above in the height direction.
FIG. 6 is a sectional view taken along the line A-A of FIG. 5, and is an enlarged sectional view of the periphery of a current collector plate mounting surface on an upper holder in the battery module.
FIG. 7 is a perspective view showing a part near current collector plate mounting surface in the upper holder.
FIG. 8 is an enlarged perspective view of a part located near one side in the width direction and a part located near a serial direction negative electrode in the upper side of the battery module.
FIG. 9 is a schematic sectional view taken along line B-B of FIG. 5.
FIG. 10 is a perspective view of a battery module of a modified example.
FIG. 11 is a plan view of the battery module of a modified example when viewed from the height direction.
FIG. 12 is a schematic sectional view corresponding to FIG. 9 in a conventional technology.

### DESCRIPTION OF EMBODIMENT

Hereinafter, exemplary embodiments according to the present disclosure are described in detail with reference to attached drawings. Note here that in the following, when a plurality of exemplary embodiments or modified examples is included, it is assumed from the beginning that the features thereof will be appropriately combined to construct a new exemplary embodiment. Furthermore, in the following exemplary embodiments, the same reference numerals are given to the same configurations in the drawings, and redundant explanations are omitted. In addition, a plurality of drawings includes schematic diagrams, and the dimensional ratios of length, width, height, and the like, of each member do not necessarily match in different drawings. Furthermore, among the constituent elements described below, constituent elements that are not described in independent claims indicating the highest concept are optional constituent elements and are not essential constituent elements. Note here that in the following description and drawings, the height direction is the height direction of a battery housing part of the upper holder, which coincides with the height direction of a battery housed in the battery housing part.

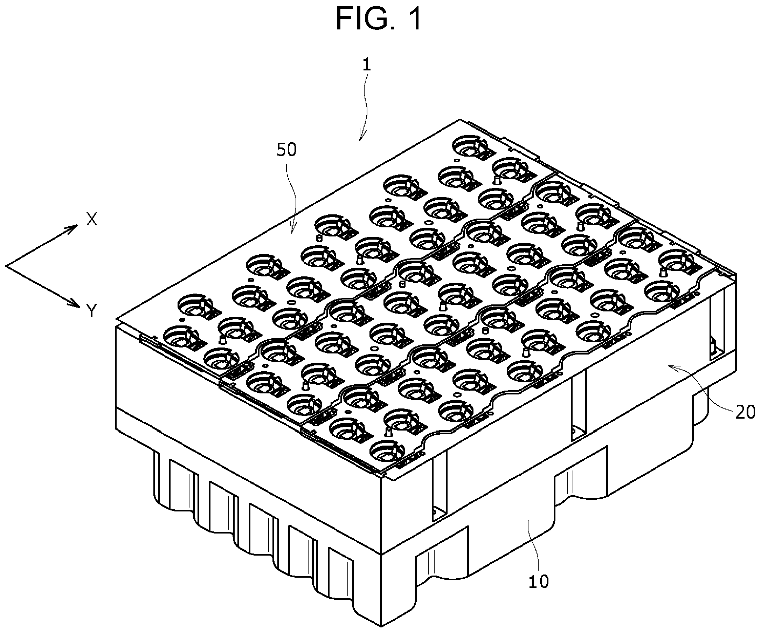

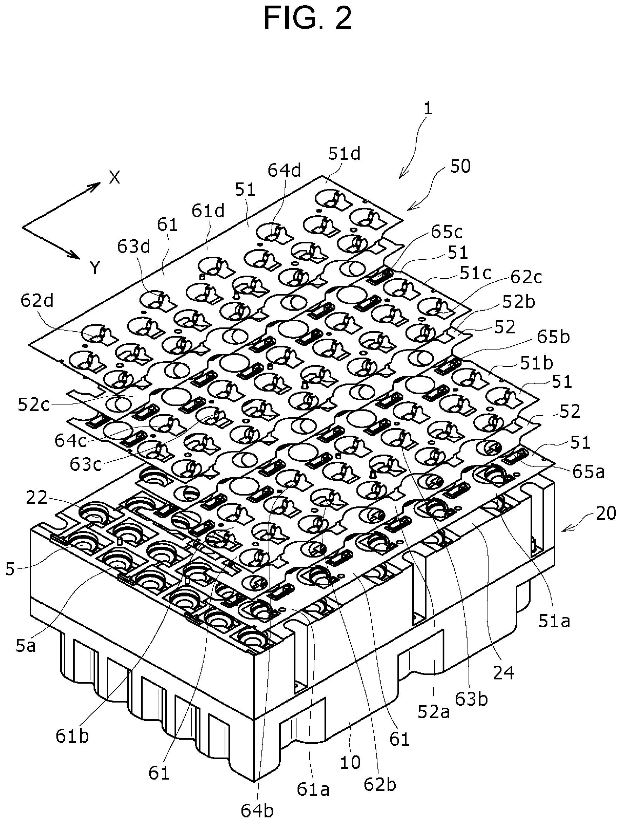

FIG. 1 is a perspective view of battery module 1 in accordance with one exemplary embodiment of the present disclosure; FIG. 2 is an exploded perspective view of battery module 1. Hereinafter, among electric power storage modules of the present disclosure, an example using a lithium-ion secondary battery (battery 5) as an electric power storage device is described. However, the electric power storage module of the present disclosure is not limited thereto. As the electric power storage device, other secondary batteries such as nickelhydrogen secondary batteries, and capacitors such as electric double layer capacitors and lithium-ion capacitors may be used as the power storage device. As shown in FIG. 1, battery module 1 includes a plurality of batteries 5, lower holder 10, upper holder 20, and current collecting structure 50. Lower holder 10 is made of insulating material, and includes a plurality of battery housing parts for housing bottom sides of batteries 5. Lower holder 10 is mounted or fixed on the mounting surface of battery module 1. Upper holder 20 is made of insulating material with insulating property. Upper holder 20 and lower holder 10 are made of, for example, heat-resistant resin. Examples of the heat-resistant resin include polycarbonate resin, polyetheretherketone resin, polyphenylene sulfide resin, polyethylene terephthalate resin, and the like.

Current collecting structure 50 includes a plurality of current collector plates 51, and insulating plates 52 whose number is one less than the number of current collector plates 51. In the example shown in FIG. 2, current collecting structure 50 includes four current collector plates 51, that is, negative electrode current collector plates 51a constituting a negative electrode, two intermediate current collector plates 51b and 51c, and positive electrode current collector plate 51d constituting a positive electrode. Furthermore, current collecting structure 50 includes three insulating plates 52. Each current collector plate 51a, 51b, 51c, and 51d is made of metal material, and each insulating plate 52 is made of epoxy resin, phenol resin, polycarbonate resin, silicon resin, or the like.

Four current collector plates 51 are in a substantially rectangular planar shape with substantially the same length in the first line direction indicated by arrow X (hereinafter, referred to as an X direction). On the other hand, the length of intermediate current collectors 51b and 51c in the second line direction indicated by arrow Y (hereinafter, referred to as a Y direction) is longer than the length in the Y direction of negative electrode current collector 51a in the Y direction, and is longer than the length in the Y direction of positive electrode current collector plate 51d. In this exemplary embodiment, the X direction coincides with the longitudinal direction of current collector plate 51 (the row direction of battery 5), and the Y direction coincides the width direction of current collector plate 51 (the direction in which arrays of a plurality of batteries 5 are arranged). The X direction and the Y direction are perpendicular to each other. Four current collector plates 51 are disposed in a row in the Y direction. Note here that in the electric power storage module of the present disclosure, the X direction and the Y direction may be exchanged.

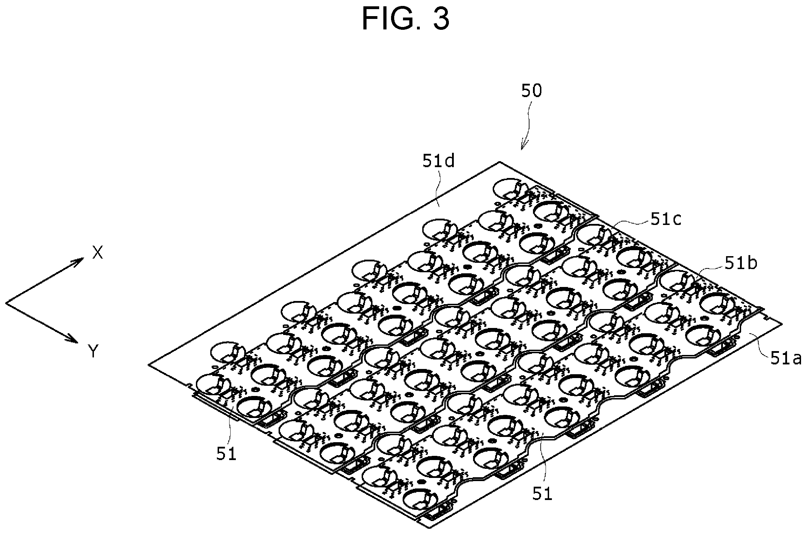

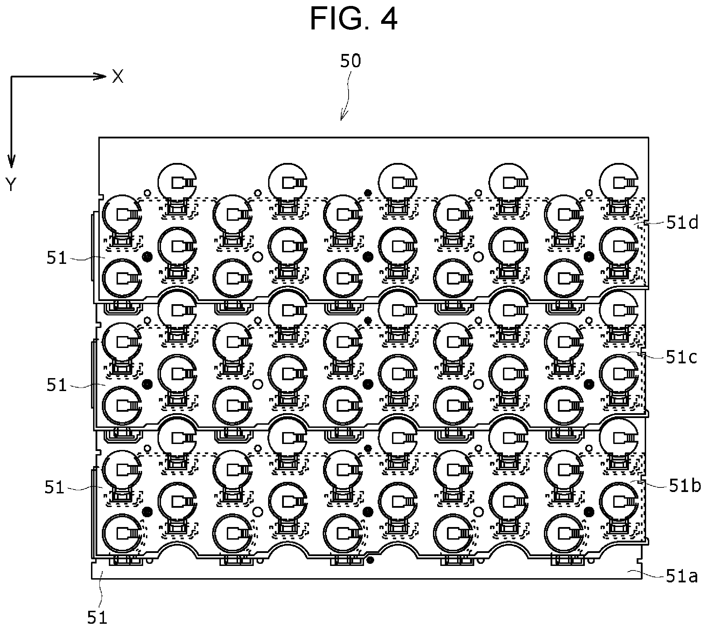

FIG. 3 is a perspective view of current collecting structure 50 showing current collector plate 51 in which a part located below the other current collector plate 51 is indicated by a dotted line; FIG. 4 is a plan view seen in the height direction of current collecting structure 50 showing a current collector plate 51 in which a part located below the other current collector plate 51 is indicated by a dotted line. As shown in FIGs. 3 and 4, in two current collector plates 51 adjacent to each other in the Y direction, a second end of first current collector plate 51 is more distant from the plurality of electric power storage devices (batteries 5) in the Y direction of electric power storage devices (batteries 5) than a first end of first current collector plate 51, and at least a part (the second end side) of first current collector plate 51 (first current collector plate) in the Y direction of second current collector plate 51 in the Y direction overlaps at least a part (the first end side) of second current collector plate 51 (second current collector plate) in the Y direction. Referring to FIG. 2 again, negative electrode current collector plate 51a is disposed at one end in the Y direction of the surface of upper holder 20 at the side where the current collector is mounted, and the first intermediate current collector plate 51b is arranged at one end in the Y direction, and stacked on negative electrode current collector 51a with first insulating plate 52a interposed therebetween so that a part in the Y direction is located on the negative electrode current collector.

Second intermediate current collector plate 51c is stacked on first intermediate current collector plate 51b via second insulating plate 52b such that a part in the Y direction is located on first intermediate current collector plate 51b. Positive electrode current collector plate 51d is disposed on the second end part in the Y direction of the surface near the current collector plate of upper holder 20. Positive electrode current collector plate 51d is stacked on second intermediate current collector plate 51c via third insulating plate 52c such that a part in the Y direction is located on second intermediate current collector plate 51c. Four current collector plates 51 and three insulating plates 52 are fixed to upper holder 20 in a state in which they are disposed on the surface near current collector plate mounting place on upper holder 20. A structure of fixing current collecting structure 50 to upper holder 20 is described later.

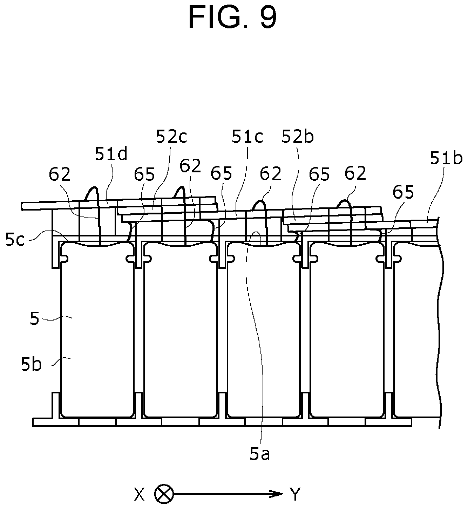

As shown in FIG. 2, upper holder 20 includes a plurality of battery housing parts 22 opening on one side in the height direction, and a part near the sealing plate of battery 5 is housed in each battery housing part 22. In this exemplary embodiment, battery 5 is, for example, a cylindrical battery. Battery 5 includes an electrode body including a positive electrode and a negative electrode, bottomed cylindrical outer covering can 5b that houses the electrode body and is electrically connected to the negative electrode, and positive electrode terminal 5a as a lid closing the opening of outer covering can 5b and being electrically connected to the positive electrode. Positive electrode terminal 5a closes the opening of outer covering can5b via an insulating gasket. At the opening of outer covering can 5b, shoulder part 5c is formed by crimping outer covering can 5b inward in the radial direction. Positive electrode terminal 5a is sandwiched and held in the height direction by shoulder part 5c and the groove formed in the side peripheral surface of outer covering can 5b. Note here that in the electric power storage module of the present disclosure, positive electrode terminal 5a may be connected to the negative electrode, and outer covering can 5b may be connected to the positive electrode. A battery may be in the other shapes, for example, a prismatic battery. Battery 5 has positive electrode terminal 5a (see FIG. 9) in the middle of the axial upper end face, and outer covering can 5b of battery 5 (see FIG. 9) serves as a negative electrode terminal.

Negative electrode current collector plate 51a includes flat plate shaped negative electrode current collector main body 61a, and a plurality of negative electrode leads 65a linked to negative electrode current collector main body 61a. The plurality of negative electrode leads 65a is disposed in an interval. Negative electrode lead 65a is formed extending inward from the inner peripheral edge of substantially rectangular through hole. A circular through-hole is formed at a predetermined interval from the through-hole in which a part of the negative electrode lead 65a is formed, and the circular through-hole is a hole into which positive electrode lead 62b is inserted. Negative electrode lead 65a includes a bent part extending from negative electrode current collector main body 61a toward battery storage part 22 in the height direction, and a joint part extending from a tip end of the bent part toward shoulder part 5c (see FIG. 9) of outer covering can 5b of battery 5 and being brought into contact with the upper surface of the shoulder part.

Positive electrode current collector plate 51d includes a flat positive electrode current collecting main body 61d and a plurality of positive electrode leads 62d connected to positive electrode current collecting main body 61d. The plurality of positive electrode leads 62d is spaced from each other. Positive electrode lead 62d is formed to extend from the inner peripheral edge of the through hole inside the through hole. The shape of the opening of the through hole in which positive electrode lead 62d is formed is a combination of a circle and a rectangle. In this shape, positive electrode lead 62d extends from a circular part to battery 5, and a rectangular part is exposed in negative electrode lead 65c of second intermediate current collector 51c. Positive electrode lead 62d includes bent part 63d that extends from positive current collector main body 61d toward battery housing part 22 in the height direction, and joint part 64d extending from a tip end of bent part 63d toward positive electrode terminal 5a of battery 5 and is in contact with the upper surface of the positive electrode terminal..

First intermediate current collector plate 51b includes flat plate shaped current collector main body 61b, a plurality of positive electrode leads 62b, and a plurality of negative electrode leads 65b. As shown in FIG. 2, the plurality of positive electrode leads 62b is disposed at intervals at the first end side of first intermediate current collector plate 51b in the Y direction, a plurality of negative electrode leads 65b is disposed at an interval from each other at the second end side of intermediate current collector plate 51b in the Y direction. Positive electrode lead 62b is formed so as to extend toward the inside of the through hole from the inner peripheral edge of the through hole. The shape of the opening of the through hole in which a part of positive electrode lead 62b is formed is a combination of a circle and a rectangle. In the circular part, positive electrode lead 62b extends to battery 5. In the rectangular part, negative electrode lead 65a of second intermediate current collector 51a is exposed. Positive electrode lead 62b includes bent part 63b extending from first current collector main body 61b toward the battery housing part in the height direction, and joint part 64b extended from the tip end of bent part 63b toward the positive electrode terminal in the battery and is brought into contact with the upper surface of the positive electrode terminal. Negative electrode lead 65b is formed extending from the inner peripheral edge to the inside of substantially rectangular through hole. A circular through hole is formed at a predetermined distance from the through hole in which a part of negative electrode leads 65b is formed, and serves as a hole through which positive electrode lead 62c is inserted. Negative electrode lead 65b includes a bent part extending from first current collector main body 61b toward battery housing part 22 in the height direction, and a joint part extending from the tip end of the bent part toward shoulder part 5c of outer covering can 5b of battery 5 and being brought into contact with the upper surface of the shoulder part.

Second intermediate current collector plate 51c includes flat plate shaped current collector main body 61c, a plurality of positive electrode leads 62c, and a plurality of negative electrode leads 65c. As shown in FIG. 2, the plurality of positive electrode leads 62c is disposed at intervals on a first end side in the Y direction of second intermediate current collector 51c, and the plurality of negative electrode leads 65c is disposed at intervals on a second end side in the Y direction of second intermediate current collector 51c. Positive electrode lead 62c extends from the inner peripheral edge of the through hole the same as in positive electrode lead 62b. Positive electrode lead 62c includes bent part 63c extending from second current collector main body 61c toward battery housing part of the height direction, and joint part 64c extending from the tip end of bent part 63c toward the positive electrode terminal and brought into contact with the upper surface of the positive electrode terminal. Negative electrode lead 65c, like negative electrode lead 65b, extends inward from the inner peripheral edge of the substantially rectangular through-hole. A circular through-hole is formed at a predetermined distance from the through-hole in which a part of the negative electrode leads 65b is formed, and serves as a hole through which positive electrode lead 62d is inserted. Negative electrode lead 65c includes a bent part extending from second current collector main body 61c toward the battery housing part in the height direction, and a joint part extending from the tip end of the first bent part toward the shoulder part of the outer covering can of the battery and brought into contact with the upper surface of the shoulder part. Insulating plates 52a, 52b, and 52c are also provided with a hole through which each positive electrode lead and each negative electrode lead is inserted.

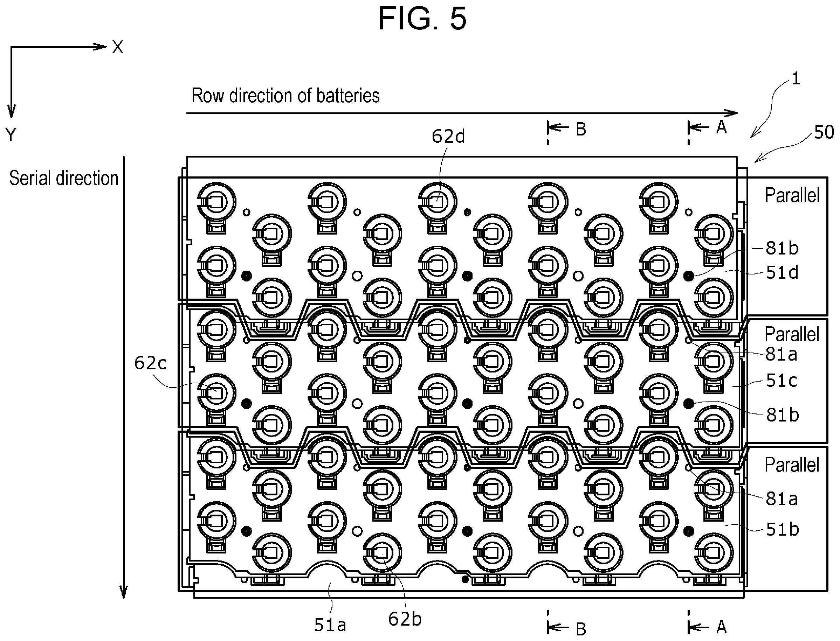

FIG. 5 is a plan view of battery module 1 seen from above in the height direction. In battery module 1, a plurality of batteries 5 forms a plurality of rows, and batteries 5 in each row are staggered in the X direction. In the plan view shown in FIG. 5, all positive electrode leads 62b of first intermediate current collector 51b, all positive electrode leads 62c of second intermediate current collector 51c, and all positive electrode leads 62d of positive electrode current collector plate 51d are visible. In battery module 1 (exposed to the outside of current collecting structure 50), a plurality of batteries 5, which is electrically connected to positive electrode lead 62b of first intermediate current collector plate 51b, is connected in parallel, and a plurality of batteries 5, which is electrically connected to positive electrode lead 62c of second intermediate current collector plate 51c, is connected in parallel. Furthermore, in battery module 1, a plurality of batteries 5 electrically connected to positive electrode lead 62d of positive electrode current collector plate 51d is connected in parallel.

A plurality of batteries 5 connected in parallel using a plurality of positive electrode leads 62b and a plurality of batteries 5 connected in parallel using a plurality of positive electrode leads 62c are connected in series. Also, a plurality of batteries 5 connected in parallel using a plurality of positive electrode leads 62c and a plurality of batteries 5 in parallel using a plurality of positive electrode leads 62d are connected in series. The serial direction corresponds to the Y direction. Current collector main body 61 of all current collector plates 51 and all insulating plates 52 extend in a direction inclined at an acute angle with respect to the orthogonal direction orthogonal to the height direction. Next, a structure for achieving such an electrical connection and an inclined arrangement of current collector plate 51 and insulating plate 52 will be described.

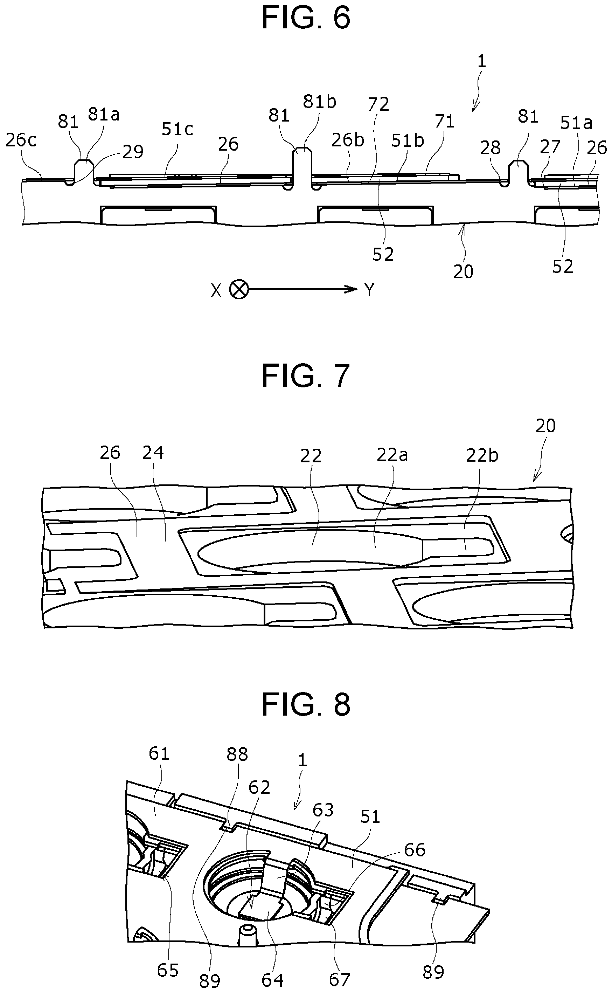

FIG. 6 is a sectional view taken along line A-A of FIG. 5, and is an enlarged sectional view of the periphery of current collector plate mounting surface 24 on upper holder 20 in the battery module. As shown in FIG. 6, upper holder 20 includes a plurality of inclined surface parts 26 inclined, for example, at an acute angle with respect to the arrangement direction of batteries 5 orthogonal to the height direction, and on which current collector plates 51 are placed. The plurality of inclined surface parts 26 is arranged as an example in the Y direction, which is the linear direction. Each inclined surface part 26 is displaced to the upper side in the height direction nearer to one side in the Y direction, and in the example shown in FIG. 6, is displaced to the upper side as it goes to the right side of the paper surface. The slopes of the plurality of inclined surface parts 26 are substantially parallel.

The plurality of inclined surface parts 26 includes a plurality of inclined surface parts 26b and 26c with substantially the same existence range in the height direction (overlapping each other when viewed from the direction in which the plurality of inclined surface parts is arranged). This exemplary embodiment includes two inclined surface parts 26b, 26c whose existing ranges in the height direction are substantially the same. On one inclined surface part (inclined surface part 26c located on the left side in the paper surface of FIG. 6) of the two inclined surface parts 26b, 26c, second intermediate current collector plate 51c is mounted. Furthermore, on the other of two inclined surface parts 26b, 26c (inclined surface part 26b located on the right side in the paper surface of FIG. 6), first intermediate current collector plate 51b is mounted. Two inclined surface parts 26b and 26c adjacent to each other in the Y direction are linked via stepped part 29 with a height. Therefore, the existing ranges in the height direction of the two inclined surface parts 26b and 26c can be the same. By linking the two inclined surface parts 26b and 26c via stepped part 29, the height of battery module 1 can be reduced, and a compact battery module 1 can be achieved.

Regarding the plurality of inclined surface parts 26 disposed in a row, each inclined surface part 26 moves upward in the height direction as it goes to one side in the Y direction (row direction). Inclined surface part 26 adjacent to upper end 28 in the height direction of inclined surface part 26 moves upward in the height direction from lower end 27 that is lower than upper end 28 toward one side in the row direction. Furthermore, the length in the Y direction of first intermediate current collector plate 51b is longer than the length in the Y-direction of inclined surface part 26b on which first intermediate current collector plate 51b is placed, and the length in the Y-direction of second intermediate current collector plate 51c is longer than the length in the Y-direction of inclined surface part 26c on which second intermediate current collector plate 51c is placed.

Therefore, a part of protruding part 71 protruding from inclined surface part 26c of second intermediate current collector plate 51c can be disposed in a position that overlaps in the height direction with mounting part 72 placed on inclined surface part 26b of first intermediate current collector plate 51b. Furthermore, a gap having substantially the same length in the height direction regardless of the position in the Y direction can be formed between a part of protruding part 71 and mounting part 72. Insulating plate 52 is disposed in this gap. In this exemplary embodiment, the plurality of inclined surface parts 26 is substantially parallel. Therefore, by appropriately adjusting the thickness of insulating plate 52, a part of protruding part 71 of second intermediate current collector plate 51c and mounting part 72 can be disposed in close contact with each other through insulating plate 52. By disposing the plurality of current collector plates 51 and plurality of insulating plates 52 in this way, the inclined arrangement of the plurality of current collector plates 51 and the plurality of insulating plates 52 can be achieved. Note here that in the electric power storage module of the present disclosure, insulating plate 52 and current collector plate 51 do not necessarily need to be in close contact with each other, and there may be a gap between insulating plate 52 and current collector plate 51.

As shown in FIG. 6, upper holder 20 includes a plurality of protruding parts 81 protruding toward current collector plate mounting surface 24 in the height direction. The plurality of protruding parts 81 includes a plurality of protruding parts 81a and 81b having different heights in the height direction, and first protruding part 81a and second protruding part 81b higher than protruding part 81a. As shown in FIG. 5, through holes are provided in current collector plate 51 and insulating plate 52 at positions overlapping protruding parts 81 in the height direction. Protruding parts 81 are inserted through the corresponding through holes. Considering that current collector plate 51 is inclined, the through-hole may have a larger gap between protruding part 81 and the through-hole in the Y direction than the gap between protruding part 81 and the through-hole in the X direction. Protruding part 81 positions at least one of current collector plates 51 and insulating plate 52 through which protruding part 81 passes. As shown in FIG. 6, second protruding part 81b passes through the through holes of the two current collector plates 51 and the through hole of one insulating plate 52 sandwiched between two current collector plates 51. After inserting second protruding part 81b into the through holes of two current collector plates 51 and the through hole of one insulating plate 52, a tip end protruding from the upper side of current collector plate 51 in second protruding part 81b may be melted by hot melting. By doing so, the through-holes of two current collector plates 51 and one insulating plate 52 can be welded and fixed to second protruding part 81b.

FIG. 7 is a perspective view showing a part of current collector plate mounting surface 24 of inclined surface part 26 of upper holder 20. As shown in FIG. 7, battery housing part 22 of upper holder 20 includes, at the upper end, connection port 22a that is a through hole and houses a part of positive electrode lead 62 and exposes the positive electrode terminal of battery 5 from upper holder 20, and connection port 22b that is a through hole communicating with connection port 22a and that houses a part of negative electrode lead 65 (see FIG. 8) and exposes shoulder part 5c of battery 5 from upper holder 20. In this exemplary embodiment, connection port 22b includes an opening that is substantially rectangular seen in the plan view. FIG. 8 is an enlarged perspective view that is located near the negative electrode in the Y direction in one side of the X direction in the upper side of battery module 1. Connection ports 22a and 22b are formed in substantially rectangular recess openings on current collector plate mounting surface 24 .

As shown in FIG. 8, upper holder 20 includes locking parts 88 having ribs that protrude toward the current collector plate in the height direction. Furthermore, recesses formed by notching are formed in the respective edges of the current collector plate 51 and the insulating plate 52. Protrusion 89 of the rib protruding from the edge of upper holder 20 toward current collecting structure 50 is fitted into the recess of current collector plate 15, thereby suppressing rotation of current collector plate 51 and insulating plate 52. As described above, positive electrode lead 62 includes bent part 63 extending from current collector main body 61 toward the battery housing part in the height direction, and joint part 64 extending from a tip end of first bent part 63 toward the positive electrode terminal and being brought into contact with the top surface of the positive terminal. Furthermore, negative electrode lead 65 includes bent part 66 extending from current collector main body 61 toward battery housing part 22 in the height direction, and a tip end of first bent part 66 extending toward the shoulder part in outer covering can of battery 5 and joint part 67 that is brought into contact with the top surface.

FIG. 9 is a schematic sectional view taken along line B-B of FIG. 5. Note here that in FIG. 9, positive electrode leads 62 and negative electrode leads 65 are simply shown as wires in order to clearly show the electrical connection. As shown in FIG. 9, each current collector plate 51 moves upward as it moves toward one side in the Y direction. Also, regarding two current collector plates 51 adjacent in the Y direction, the upper part of one current collector plate 51 and the lower part of the other current collector plate overlap in the height direction.

For each current collector plate 51, a plurality of positive electrode leads 62 is provided on the upper part, and a plurality of negative electrode leads 65 is provided on the lower part. The positive electrode of each battery 5 is electrically connected to positive electrode lead 62 of current collector plate 51 positioned in the upper side, and the negative electrode of each battery 5 is electrically connected to negative electrode lead 65 of current collector plate 51 positioned in the lower side. With this electrical connection structure, a plurality of parallel-connected batteries 5 can be connected in series.

Each current collector plate 51 moves upward as it goes to one side in the Y direction. On the other hand, the plurality of batteries 5 held by upper holder 20 is present at the same height position. Therefore, the height of positive electrode lead 62 varies depending on the position in the Y direction where positive electrode lead 62 exists, and the height of negative electrode lead 65 also varies depending on the position in the Y direction where negative electrode lead 65 exists. Furthermore, positive electrode lead 62 is provided above current collector plate 51, and negative electrode lead 65 is provided below current collector plate 51. Therefore, the height of positive electrode lead 62 is different from the height of negative electrode lead 65. Furthermore, the plurality of positive electrode leads 62 includes two or more positive electrode leads 62 with different heights, and the plurality of negative electrode leads 65 includes two or more negative electrode leads 65 with different heights. Specifically, among positive electrode lead 62 and negative electrode lead 65 arranged in the Y direction, positive electrode lead 62 and negative electrode lead 65 located more distant from battery 5 on current collector plate 51 are longer than positive electrode lead 62 and negative electrode lead 65 located closer to battery 5 on current collector plate 51.

As described above, battery module 1 includes a plurality of batteries 5 arranged in a row and a plurality of current collector plates 51 electrically connected to the plurality of batteries 5, and the plurality of batteries 5 is arranged in a direction orthogonal to the height direction of each battery 5. The plurality of current collector plates 51 includes flat plate-shaped current collector bodies 61 that are inclined with respect to the arrangement direction of the plurality of batteries 5, and are arranged in a row. The plurality of current collector plates 51 includes first current collector plate 51 and second current collector plates 51 that are adjacent to each other, and a part of current collector main body 61 in first current collector plates 51 and at least a part of current collector main body 61 in second current collector plates 51 overlap in the height direction.

According to current collecting structure 50, unlike the conventional current collecting structure 250 shown in FIG. 12, current collecting structure 50 does not include current collector plate 251 including a bent part and a complicated shape including a bent part, and includes current collector plate 51 with simple flat shape including current collector main body 61. Furthermore, in current collecting structure 50, two adjacent current collector plates 51 have a simple structure in which at least a part of current collecting main body 61 of one current collector plate overlaps at least a part of current collecting main body 61 of the other current collector plate 51 in the height direction. Therefore, according to battery module 1, the tolerance of current collecting structure 50 can be suppressed, and current collecting structure 50 with high dimensional accuracy can be constructed.

Furthermore, in the direction in which the plurality of current collector plates 51 is aligned, a second end of first current collector plate 51 may be more distant in the height direction from a plurality of batteries 5 than a first end of first current collector plate 51. In the direction in which a plurality of current collector plate 51 is aligned, a second end of second current collector plate 51 may be more distant in the height direction from batteries 5 than a first end of second current collector plate 51. Furthermore, the first end side of second current collector plate 51 may be disposed between the second end of first current collector plate 51 and the plurality of batteries 5.

Furthermore, insulating plate 52 inclined in the arrangement direction and having insulating properties may be provided between a part of first current collector plate 51 and a part of second current collector plate 51.

According to this configuration, two current collector plates 51 having overlapping parts in the height direction can be insulated easily and inexpensively.

Furthermore, a plurality of current collector plates 51 may include a plurality of positive electrode leads 62 connected to positive electrodes of a plurality of first batteries included in the plurality of batteries 5, and intermediate current collector plates 51b and 51c including a plurality of negative electrode leads 65 connected to negative electrodes of a plurality of second batteries included in the plurality of batteries 5.

According to this configuration, a plurality of batteries connected in parallel using current collector plates 51b and 51c having positive electrode lead 62 and negative electrode lead 65 can be easily connected in series.

Furthermore, a plurality of positive electrode leads 62 may include two or more positive electrode leads 62 with different length in the height direction, and a plurality of negative electrode leads 65 may include two or more negative electrode leads 65 with different length in the height direction.

According to this configuration, the inclined arrangement of current collector plate 51 and insulating plate 52 can be easily achieved using positive electrode lead 62 with different heights and negative electrode lead 65 with different heights.

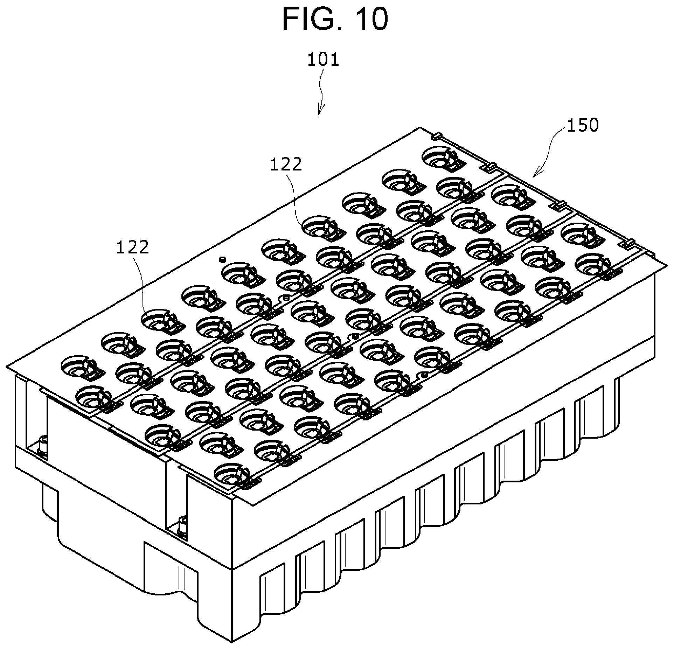

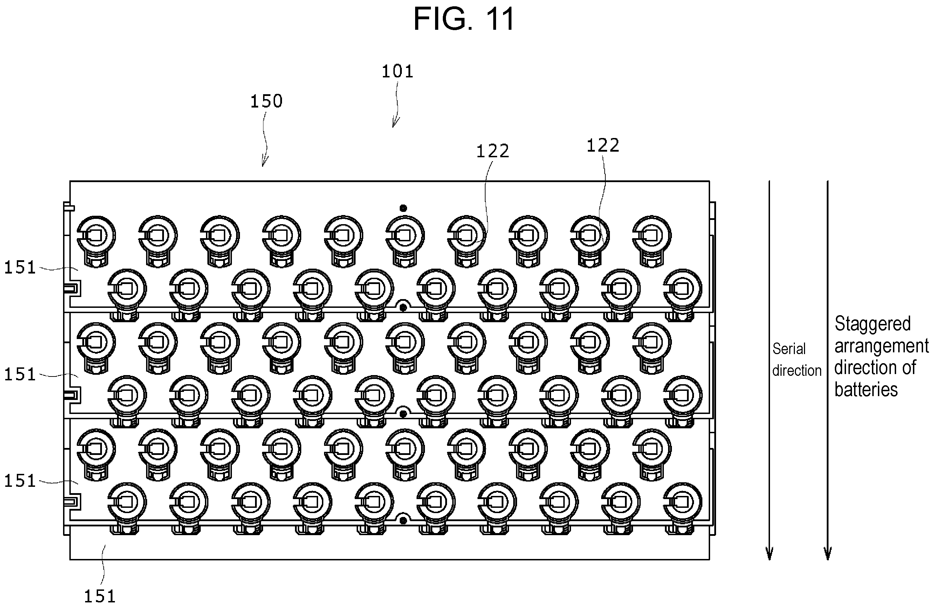

Note here that the present invention is not limited to the above-mentioned exemplary embodiment and the modification thereof, modifications and variations can be carried out in the matter described in the claims of the present application and an equivalent scope thereof. For example, in the above exemplary embodiment, as shown in FIG. 5, a case where the direction of the series of the plurality of current collector plates 51 and the direction of the staggered arrangement of battery housing parts 22 are orthogonal in a plan view when viewed in the height direction has been described. However, as shown in battery module 101 of modified examples shown in FIGS. 10 and 11, current collecting structure 150 may have a configuration in which the direction of the series of the plurality of current collector plates 151 coincides with the direction of the staggered arrangement of battery housing parts 122.

Also, as shown in FIG. 5, the case of connecting a plurality of batteries staggered in two rows in parallel has been described, but a plurality of batteries arranged in staggered rows in three or more rows may be connected in parallel. Furthermore, although the case of parallelly connecting a plurality of batteries staggered in multiple rows has been described, multiple rows of batteries arranged in parallel may be connected in parallel. Further, as shown in FIG. 2, the case where current collecting structure 50 includes two intermediate current collector plates 51b and 51c has been described, but the current collecting structure may include three or more intermediate current collector plates. Furthermore, a case where a plurality of positive electrode leads 62 is disposed above inclined intermediate current collector plates 51b, 51c, and a plurality of negative electrode leads 65 is disposed below intermediate current collector plates 51b, 51c is described. However, a plurality of negative electrode leads may be disposed above the inclined intermediate current collector plate, and a plurality of positive electrode leads may be disposed below the intermediate current collector plate.

Also, the case where current collector plate 51 includes leads 62 and 65 formed of a metal piece having a bent part and leads 62 and 65 are connected to the electrodes of battery 5 to collect current is described. However, the current collector plate and the electrode of the battery may be electrically connected by wire bonding. Furthermore, the case where insulating plate 52 is disposed between the two current collector plates 51 overlapping in the height direction to insulate two current collector plates 51 has been described. A plurality of current collector plates disposed obliquely in the resin may be inserted to form an insulating part between the current collector plates overlapping in the height direction by insert molding. Furthermore, the case where upper holder 20 includes protruding part 81 protruding in the height direction and current collecting structure 50 is fixed to upper holder 20 using protruding part 81 has been described. However, the current collecting structure may be fixed to the upper holder using fastening means or adhesive.

Further, a case where a plurality of inclined surface parts 26 is formed on upper holder 20, and at least a part of current collector plate 51 is disposed on inclined surface part 26 to construct an inclined arrangement of the plurality of current collector plates 51 and the plurality of insulating plates 52 is described. However, the upper holder may be provided with a plurality of column parts protruding upward from the upper surface of the upper holder main body and having different heights. By supporting the current collecting structure by the tip end of the plurality of column parts having different heights, the inclined arrangement of the plurality of current collector plates and the plurality of insulating plates may be constructed. Alternatively, an inclined arrangement of the plurality of current collector plates and the plurality of insulating plates may be constructed by varying the height of the adhesive part for allowing the current collecting structure to adhere to the upper surface of the upper holder main body in the row direction of the current collector plates. Furthermore, the battery holder is made of an upper holder and a lower holder, but the battery holder may be configured integrally.

### REFERENCE MARKS IN THE DRAWINGS

1, 101 battery module, 5 battery, 5a positive electrode terminal, 5b outer covering can, 5c shoulder part, 10 lower holder, 20 upper holder, 22, 122 battery housing part, 22a, 22b connection port, 24 current collector plate mounting surface, 26, 26b, 26c inclined surface part, 27 lower side end, 28 upper side end, 29 stepped part, 50, 150 current collecting structure, 51, 151 current collector plate, 51a negative electrode current collector plate, 51b first intermediate current collector plate, 51c second intermediate current collector plate, 51d positive electrode current collector plate, 52 insulating plate, 52a first insulating plate, 52b second insulating plate, 52c third insulating plate, 61 current collector main body 61a negative electrode current collector main body, 61b first current collector main body, 61c second current collector main body, 61d positive electrode current collector main body, 62, 62b, 62c, 62d positive electrode lead, 65, 65a, 65b, 65c negative electrode lead, 65b negative electrode lead, 71 protruding part, 72 mounting part, 81 protruding part, 81a first protruding part, 81b second protruding part, 88 locking part, 89 protrusion.

## Claims

1. An electric power storage module (1) comprising:
a plurality of electric power storage devices (5) arranged; and
a plurality of current collector plates (51) each electrically connecting the plurality of electric power storage devices to each other;
wherein the plurality of electric power storage devices are arranged in an arrangement direction (Y) orthogonal to a height direction (Z) of each of the electric power storage devices,
each of the plurality of current collector plates includes a current collector main body (61) that is flat plate-shaped and is inclined with respect to the arrangement direction of the plurality of electric power storage devices, and the plurality of current collector plates are disposed in a row,
the plurality of current collector plates includes a first current collector plate and a second current collector plate that are adjacent to each other, and a part of the current collector main body in the first current collector plate overlaps at least a part of the current collector main body in the second current collector plate in the height direction.

2. The electric power storage module according to claim 1, wherein
in a direction in which the plurality of current collector plates is aligned, a second end of the first current collector plate is more distant from the plurality of electric power storage devices in the height direction than a first end of the first current collector plate,
in a direction in which the plurality of current collector plates is aligned, a second end of the second current collector plate is more distant from the plurality of electric power storage devices in the height direction than a first end of the second current collector plate, and
the first end of the second current collector plate is disposed between the second end of the first current collector plate and the plurality of electric power storage devices.

3. The electric power storage module according to claim 1 or claim 2, comprising
an insulating plate with insulating property, inclined with respect to the arrangement direction between the part of the first current collector plate and the at least a part of the second current collector plate.

4. The electric power storage module according to any one of claim 1 to claim 3, wherein the plurality of current collector plates comprises an intermediate current collector plate including a plurality of positive electrode leads connected to positive electrodes of a plurality of first electric power storage devices included in the plurality of electric power storage devices, and a plurality of negative electrode leads connected to negative electrodes of a plurality of second electric power storage devices included in the plurality of electric power storage devices.

5. The electric power storage module according to claim 4,
wherein the plurality of positive electrode leads includes two or more of the positive electrode leads with lengths in the height direction being different, and the plurality of negative electrode leads includes two or more of the negative electrode leads with lengths in the height direction being different.

## Patentansprüche

1. Elektrisches Energiespeichermodul (1), umfassend:
eine Vielzahl von elektrischen Energiespeichervorrichtungen (5), die angeordnet sind; und
eine Vielzahl von Stromkollektorplatten (51), die jeweils die Vielzahl von elektrischen Energiespeichervorrichtungen elektrisch miteinander verbinden;
wobei die Vielzahl von elektrischen Energiespeichervorrichtungen in einer Anordnungsrichtung (Y) angeordnet sind, die orthogonal zu einer Höhenrichtung (Z) jeder der elektrischen Energiespeichervorrichtungen ist,
jede der Vielzahl von Stromkollektorplatten einen Stromkollektor-Hauptkörper (61) umfasst, der flachplattenförmig ist und in Bezug auf die Anordnungsrichtung der Vielzahl von elektrischen Energiespeichervorrichtungen geneigt ist, und die Vielzahl von Stromkollektorplatten in einer Reihe angeordnet sind,
die Vielzahl von Stromkollektorplatten eine erste Stromkollektorplatte und eine zweite Stromkollektorplatte umfasst, die zueinander benachbart sind, und ein Teil des Stromkollektor-Hauptkörpers in der ersten Stromkollektorplatte mindestens einen Teil des Stromkollektor-Hauptkörpers in der zweiten Stromkollektorplatte in der Höhenrichtung überlappt.

2. Elektrisches Energiespeichermodul nach Anspruch 1, wobei
in einer Richtung, in der die Vielzahl von Stromkollektorplatten ausgerichtet ist, ein zweites Ende der ersten Stromkollektorplatte in der Höhenrichtung weiter von der Vielzahl von elektrischen Energiespeichervorrichtungen entfernt ist als ein erstes Ende der ersten Stromkollektorplatte,
in einer Richtung, in der die Vielzahl von Stromkollektorplatten ausgerichtet ist, ein zweites Ende der zweiten Stromkollektorplatte in der Höhenrichtung weiter von der Vielzahl von elektrischen Energiespeichervorrichtungen entfernt ist als ein erstes Ende der zweiten Stromkollektorplatte, und
das erste Ende der zweiten Stromkollektorplatte zwischen dem zweiten Ende der ersten Stromkollektorplatte und der Vielzahl von elektrischen Energiespeichervorrichtungen angeordnet ist.

3. Elektrisches Energiespeichermodul nach Anspruch 1 oder Anspruch 2, umfassend eine Isolierplatte mit isolierender Eigenschaft, die in Bezug auf die Anordnungsrichtung zwischen dem Teil der ersten Stromkollektorplatte und dem mindestens einen Teil der zweiten Stromkollektorplatte geneigt ist.

4. Elektrisches Energiespeichermodul nach einem der Ansprüche 1 bis 3, wobei die Vielzahl von Stromkollektorplatten eine Zwischen-Stromkollektorplatte umfasst, die eine Vielzahl von positiven Elektrodenanschlüssen, die mit positiven Elektroden einer Vielzahl von ersten elektrischen Energiespeichervorrichtungen verbunden sind, die in der Vielzahl von elektrischen Energiespeichervorrichtungen enthalten sind, und eine Vielzahl von negativen Elektrodenanschlüssen umfasst, die mit negativen Elektroden einer Vielzahl von zweiten elektrischen Energiespeichervorrichtungen verbunden sind, die in der Vielzahl von elektrischen Energiespeichervorrichtungen enthalten sind.

5. Elektrisches Energiespeichermodul nach Anspruch 4,
wobei die Vielzahl von positiven Elektrodenanschlüssen zwei oder mehr der positiven Elektrodenanschlüsse umfasst, deren Längen in der Höhenrichtung unterschiedlich sind, und die Vielzahl von negativen Elektrodenanschlüssen zwei oder mehr der negativen Elektrodenanschlüsse umfasst, deren Längen in der Höhenrichtung unterschiedlich sind.

## Revendications

1. Module de stockage d'énergie électrique (1) comprenant :
une pluralité de dispositifs de stockage d'énergie électrique (5) agencés ; et
une pluralité de plaques de collecteur de courant (51) connectant électriquement chacune la pluralité de dispositifs de stockage d'énergie électrique les uns aux autres ;
dans lequel la pluralité de dispositifs de stockage d'énergie électrique sont agencés dans une direction d'agencement (Y) orthogonale à une direction de hauteur (Z) de chacun des dispositifs de stockage d'énergie électrique,
chacune de la pluralité de plaques de collecteur de courant comprend un corps principal de collecteur de courant (61) qui est en forme de plaque plate et est incliné par rapport à la direction d'agencement de la pluralité de dispositifs de stockage d'énergie électrique, et la pluralité de plaques de collecteur de courant sont disposées en une rangée,
la pluralité de plaques de collecteur de courant comprend une première plaque de collecteur de courant et une deuxième plaque de collecteur de courant qui sont adjacentes l'une à l'autre, et une partie du corps principal de collecteur de courant dans la première plaque de collecteur de courant chevauche au moins une partie du corps principal de collecteur de courant dans la deuxième plaque de collecteur de courant dans la direction de hauteur.

2. Module de stockage d'énergie électrique selon la revendication 1, dans lequel
dans une direction dans laquelle la pluralité de plaques de collecteur de courant est alignée, une deuxième extrémité de la première plaque de collecteur de courant est plus éloignée de la pluralité de dispositifs de stockage d'énergie électrique dans la direction de hauteur qu'une première extrémité de la première plaque de collecteur de courant,
dans une direction dans laquelle la pluralité de plaques de collecteur de courant est alignée, une deuxième extrémité de la deuxième plaque de collecteur de courant est plus éloignée de la pluralité de dispositifs de stockage d'énergie électrique dans la direction de hauteur qu'une première extrémité de la deuxième plaque de collecteur de courant, et
la première extrémité de la deuxième plaque de collecteur de courant est disposée entre la deuxième extrémité de la première plaque de collecteur de courant et la pluralité de dispositifs de stockage d'énergie électrique.

3. Module de stockage d'énergie électrique selon la revendication 1 ou la revendication 2, comprenant
une plaque isolante ayant une propriété isolante, inclinée par rapport à la direction d'agencement entre la partie de la première plaque de collecteur de courant et l'au moins une partie de la deuxième plaque de collecteur de courant.

4. Module de stockage d'énergie électrique selon l'une quelconque des revendications 1 à 3, dans lequel la pluralité de plaques de collecteur de courant comprend une plaque de collecteur de courant intermédiaire comprenant une pluralité de languettes d'électrode positive connectées à des électrodes positives d'une pluralité de premiers dispositifs de stockage d'énergie électrique inclus dans la pluralité de dispositifs de stockage d'énergie électrique, et une pluralité de languettes d'électrode négative connectées à des électrodes négatives d'une pluralité de deuxièmes dispositifs de stockage d'énergie électrique inclus dans la pluralité de dispositifs de stockage d'énergie électrique.

5. Module de stockage d'énergie électrique selon la revendication 4,
dans lequel la pluralité de languettes d'électrode positive comprend deux languettes d'électrode positive ou plus ayant des longueurs différentes dans la direction de hauteur, et la pluralité de languettes d'électrode négative comprend deux languettes d'électrode négative ou plus ayant des longueurs différentes dans la direction de hauteur.
